Europäisches Patentamt

European Patent Office

Office européen des brevets

(19)

(11) **EP 1 158 806 A1**

(12) **EUROPEAN PATENT APPLICATION**

(43) Date of publication:
**28.11.2001 Bulletin 2001/48**

(51) Int Cl.⁷: $H04N\ 7/26$

(21) Application number: **01304607.3**

(22) Date of filing: **24.05.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **24.05.2000 US 206783 P
06.10.2000 KR 2000058757**

(71) Applicant: **SAMSUNG ELECTRONICS CO., LTD.
Suwon-City, Kyungki-do (KR)**

(72) Inventor: **Yoo, Kook-yeol
Gwonseon-gu, Suwon-si, Gyeonggi-do (KR)**

(74) Representative: **Geary, Stuart Lloyd et al
Venner, Shipley & Co.,
20 Little Britain
London EC1A 7DH (GB)**

(54) **Motion vector coding**

(57) A motion vector coding method is provided. The motion vector coding method includes the steps of (a) performing an affine motion estimation to obtain affine motion parameters, (b) converting the affine motion parameters to a predetermined number of translational motion vectors, and (c) coding the difference between the converted translational motion vectors of a current block and the converted translational motion vectors of a previous block. The method allows for low bit generation while maintaining motion estimation performance available from affine motion estimation.

**FIG. 1**

```
                    START

ESTIMATE AFFINE MOTION PARAMETERS USING
PIXEL VALUES OF BLOCK TO BE CODED IN        —102
CURRENT FRAME AND PIXEL VALUES OF
SEARCH AREA IN PREVIOUS FRAME

CONVERT ESTIMATED AFFINE MOTION
PARAMETERS TO TRANSLATIONAL               —104
MOTION VECTORS

QUANTIZE CONVERTED TRANSLATIONAL
MOTION VECTORS TO FIXED—POINT NUMBER      —106
HAVING PREDETERMINED ACCURACY

SELECT OPTIMUM ACCURACY                    —108

PREDICT TRANSLATIONAL MOTION VECTORS OF
SELECTED ACCURACY USING TRANSLATIONAL     —110
MOTION VECTORS OF NEIGHBORING BLOCKS

CALCULATE DIFFERENCES BETWEEN
TRANSLATIONAL MOTION VECOTRS USING
CONVERTED TRANSLATIONAL MOTION            —112
VECTORS OF CURRENT BLOCK AND
NEIGHBORING BLOCKS

PERFORM VARIABLE LENGTH CODING ON
DIFFERENCE BETWEEN TRANSLATIONAL          —114
MOTION VECTORS

                    END
```

EP 1 158 806 A1

**Description**

The present invention relates to a method for compressing a video signal, the method including a motion vector coding step comprising performing affine motion estimation to obtain affine motion parameters.

Recently, the International Telecommunication Union - Terminal Sector (ITU- T) has made efforts to standardize the H.26L protocol for next generation visual telephony. Since standard schemes such as H.261, H.263, and H.263+, which define a motion vector coding methods for visual telephony, were adopted as ITU-T standards, technologies based on H. 263++ and Moving Picture Experts Group (MPEG)-4 standard schemes have been developed. Nonetheless, there remains a need for further improving coding efficiency for ultra low bandwidth real-time applications with a short end-to-end delay. That is, it is highly desirable to have an estimation method and a motion vector coding method that provide for an improved frame rate at the same bit rate as that of the coding method of the H.263+ standard, or that significantly reduces the bit rate while maintaining the same image quality as that encoded by an H.263 + compliant coding method.

In one conventional motion estimation method, assuming that the pair (i,j) are the co-ordinates of a macroblock or a subblock thereof, an affine motion estimation is performed to represent the motion of a pixel in an image using the following Equations (1a) and (1b):

$$v_X(i,j) = a_0 + a_1 i + a_2 j \qquad (1a)$$

$$v_Y(i,j) = a_3 + a_4 i + a_5 j \qquad (1b)$$

where $v_X(i,j)$ and $v_Y(i,j)$ are motion magnitude components in the X- and Y-axis directions for a pixel located in the block (i,j). The expression $[v_X(i,j), v_Y(i,j)]^T$, consisting of motion magnitude components $v_X(i,j)$ and $v_Y(i,j)$, is referred to as the motion vector of the pixel located at the co-ordinates (i,j). That is, the motion vector of each pixel is determined by each pixel location and six parameters $[a0, a1, a2, ... a5]^T$. These parameters $[a0, a1, a2, ... a5]^T$ may be called affine motion parameters. However, in a method of estimating motion using the affine motion parameters, as the number of bits representing the affine motion parameters increases, computation of a motion estimation becomes more complex and takes more time. Furthermore, with respect to some blocks, this affine motion estimation cannot be more effective than conventional translational motion estimation.

Standards such as H. 2611 H.263, MPEG-1, and MPEG-2 represent the motion of a pixel using a translational motion model expressed by:

$$v_X = (i, j) = t_1 \qquad (2a)$$

$$v_Y = (i, j) = t_2 \qquad (2b)$$

As is evident from Equations (2a) and (2b), the motion vectors of all pixels in a block are the same. However, in the case of affine motion, as expressed in Equations (1a) and (1b), a motion vector is variable within a block. Affine motion estimation is capable of representing complex motions that include any or all of transformations such as rotation, magnification, reduction and shear, thereby allowing for more precise motion estimation.

To estimate the motion of an image using affine motion estimation, affine motion parameters, as expressed in Equations (1a) and (1b), must be obtained on a block-by-block basis. The motion parameters correspond to displacements that minimize the difference between pixel values for a present image and a preceding motion-compensated image and are expressed by the following Equation (3):

$$\arg\min_{a_k} \sum_{(i,j)\in M_k} \{I_n(i,j) - I_{n-1}(i + v_X(i,j) + v_Y(i,j)\}^2 \qquad (3)$$

where I(i,j) denotes the luminance of the pixel at location (i,j), and $M_k$ denotes the k-th block. $[v_X(i,j), v_Y(i,j)]^T$ is expressed by Equations (1a) and (1b). That is, motion parameters that minimize the luminance difference between a present block and a previous block, motion-compensated by the motion parameters, are expressed in Equation (3) and the motion parameters are called motion-estimated parameters.

In the conventional affine motion estimation method, the motion parameters are obtained using the following Equation (4):

$$a_k^{l+1} = a_k^l + u_k^l \qquad (4)$$

where the term $a_k^l$ = [a0, a1, a2, a3, a4, a5]$^T$ and I denotes an iteration coefficient.

When I equals 0, the motion parameter is expressed by:

$$a_k^0 = [0,0,0,0,0,0]^T$$

In this case, the motion parameter is called an initial value.

$$u_k^l = \left\{ \sum_{(i,j) \in M_k} \left\{ h_{ij}^l (h_{ij}^l)^T \right\} \right\}^{-1} \left\{ \sum \left\{ d_n^l (i,j)^T h_{ij}^l \right\} \right\} \qquad (6)$$

$$h_k^l = \left[ G_X^l(i,j), iG_X^l(i,j), jG_X^l(i,j), G_Y^l(i,j), iG_Y^l(i,j), jG_Y^l(i,j) \right]^T \qquad (7)$$

$$d_n^l(i,j) = I_n(i,j) - I_{n-1}(i,j)(i + a_0^l + a_1^l i + a_2^l i,j + a_3^l + a_4^l i + a_5^l j \qquad (8)$$

$$G_X^l(i,j) = \left\{ I_n(i+1,j) - I_{n-1}(i,j)(i + a_0^l + a_1^l i + a_2^l j - 1, j + a_3^l + a_4^l i + a_5^l j \right\}/2 \quad (9a)$$

The method of estimating the affine motion parameters shown in Equations (4) through (9b) is called a differential motion estimation method. The differential motion estimation method is mostly used in affine motion estimation.

In this case, for affine motion estimation, first, the iteration coefficient I is set to "0" and the square error is set at a maximum as possible. Next, the value obtained from Equation (6) is updated using Equations 6 through (9b), and then the updated value is substituted into Equation (4) to thereby obtain $a_k^{l+1}$. Then, the difference between the present block and the motion-compensated previous block is obtained using the value $a_k^{l+1}$ and the following Equation:

$$SE(l+1) = \sum_{i,j=M_k} \left\{ I_n(i,j) - I_{n-1}(i + a_0^{l+1} + a_1^{l+1} i + a_2^{l+1} j, j + a_3^{+1l} + a_4^{l+1} i + a_5^{i+1} j \right\} \quad (10)$$

If SE(I+1) is less than SE(I), I increases by 1 and the above steps are repeatedly performed. If SE(I+1) is greater than SE(I), $a_k^l$ at that time is taken as the estimated motion parameter, and then repetition of the motion estimation process is terminated.

However, the affine motion estimation method has a problem in that motion estimation performance for small-sized blocks is significantly degraded. Thus, although the affine motion estimation method exhibits an excellent image prediction over the translational motion estimation method, it cannot be applied to standards such as H.261, H.263, MPEG-1 and MPEG-4.

The affine motion parameters are real numbers with decimal points. Thus, to use these parameters in actual video coding, they must be converted or quantized to fixed-point numbers.

In standards such as H.261, H.263, MPEG-1, and MPEG-4, to which use a translational motion model, motion information to be encoded in each block is predictively encoded using motion vectors, thereby reducing the number of bits generated per unit time in a bitstream during coding of the motion information. However, if an affine motion model is used, since each of the six motion parameters shown in Equations (1a) and (1b) is not affected by neighbouring blocks, it is very difficult to predictively encode motion information. That is, a significantly large number of bits may be required in coding a motion parameter when using an affine motion model. Thus, it is highly desirable to have a method of effectively coding affine motion parameters.

A method according to the present invention is characterised by converting the affine motion parameters into a plurality of translational motion vectors and coding the difference between the translational motion vectors for the current block and those for a previous block.

Preferred and optional features are set out in claims 2 to 28 appended hereto.

For the avoidance of doubt, the matter for which protection is sought comprises the union of the scopes of the independent claims appended hereto.

The above objectives and advantages of the present invention will become more apparent by describing in detail a preferred embodiment thereof with reference to the attached drawings in which:

Figure 1 is a flowchart showing the main steps of a motion vector coding method according to the present invention;
Figure 2 shows the co-ordinate system of an affine motion vector used in a motion estimation method according to the present invention;
Figure 3 shows the codes of blocks; and
Figure 4 is a flowchart showing the main steps of a motion vector coding method according to the present invention.

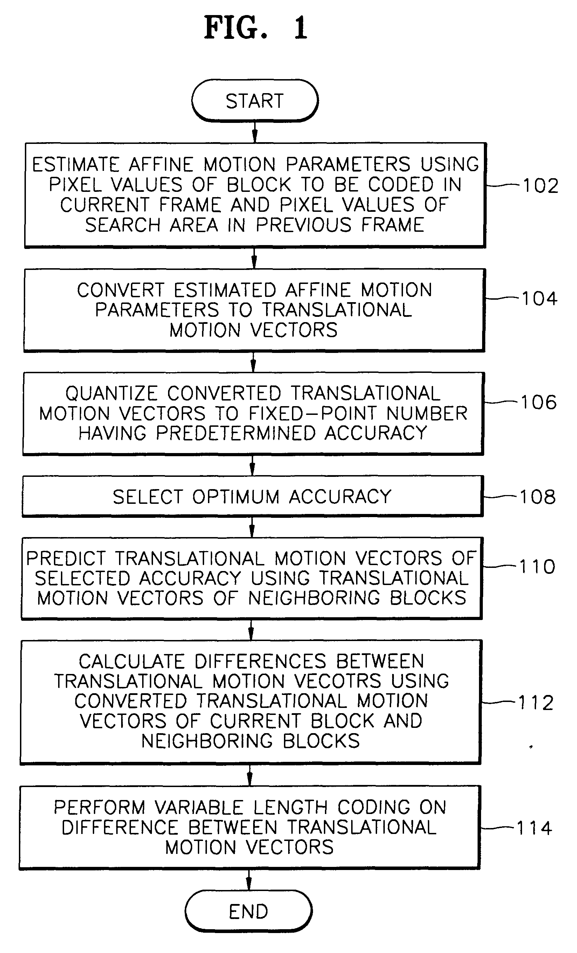

Referring to Figure 1, in a method of coding a motion vector according to the present invention, first, pixel values of a block to be coded in a current image frame and pixel values of a search area in a preceding image frame are used to perform an affine motion estimation, thereby obtaining affine motion parameters for the current block (step 102). The affine motion estimation may be described using six parameters, for example, $a_0$, $a_1$, $a_2$, $a_3$, $a_4$, and $a_5$. In this embodiment, the affine motion is described using three translational motion vectors. For this purpose, next, the affine motion parameters obtained by performing the motion estimation are converted to translational motion vectors (step 104). In step 104, assuming that the size of the current block and a constant $\alpha$ are defined as S S, and S/4 + 1/2, respectively, the affine motion parameters are converted to translational motion vectors based on the following Equations (11a) and (11b):

$$v_X(i,j) = \frac{1}{2\alpha}(4\alpha \text{-} i \text{-} j)v_{X,A} + \frac{1}{2\alpha}(\text{-}2\alpha \text{-} i)v_{X,B} + \frac{1}{2\alpha}(\text{-}2\alpha \text{-} j)v_{X,C} \tag{11a}$$

$$v_Y(i,j) = \frac{1}{2\alpha}(4\alpha \text{-} i \text{-} j)v_{Y,A} + \frac{1}{2\alpha}(\text{-}2\alpha \text{-} i)v_{Y,B} + \frac{1}{2\alpha}(\text{-}2\alpha \text{-} j)v_{Y,C} \tag{11b}$$

Since the affine motion parameters are real numbers with decimal points, they are converted or quantized to fixed-point numbers so as to be used in actual motion vector coding. For this purpose, the translational motion vectors converted in step 104 are quantized to fixed-point values having a predetermined accuracy (step 106).

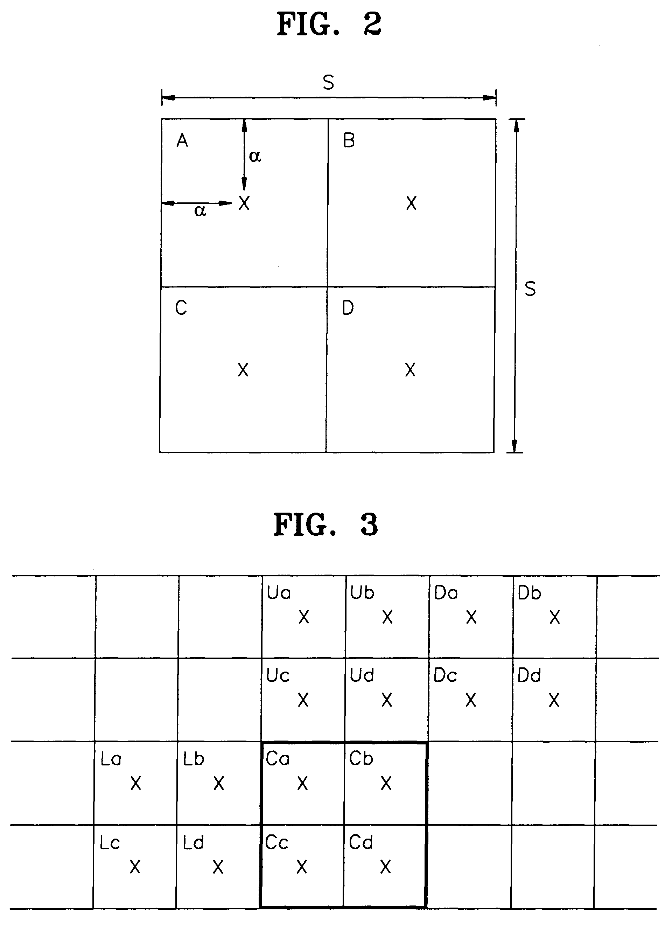

Assuming that the current block consists of four subblocks A, B, C and D as shown in Figure 2, if the co-ordinate values of the centre points of the subblocks A, B, C and D are substituted into the co-ordinates i and j of Equations (1a) and (1b), the motion vectors of the centre points of the subblocks A, B, C and D can be obtained as follows:

$$[v_{X,A}, v_{Y,A}] = [a_0 + a_1\alpha + a_2\alpha, a_3 + a_4\alpha + a_5\alpha] \tag{12a}$$

$$[v_{X,B}, v_{Y,B}] = [a_0 + 3a_1\alpha + a_2\alpha, a_3 + 3a_4\alpha + a_5\alpha] \tag{12b}$$

$$[v_{X,C}, v_{Y,C}] = [a_0 + a_1\alpha + 3a_2\alpha, a_3 + a_4\alpha + 3a_5\alpha] \tag{12c}$$

Next, an optimum accuracy is selected (step 108) based on:

$$\min_{\varphi \in \Pi}\{MSE(\varphi) + \lambda Bits(\varphi)\} \tag{13}$$

where $\varphi$ and $\Pi$ are a selected acc:uracy and a set of accuracies respectively. Furthermore, $\lambda$ is set to $0.85QP^2$ assuming

that QP is a quantization interval used in coding an image. MSE($\varphi$) denotes the mean square sum of a differential signal between the current block and a preceding motion-compensated block when translational motion vectors of the current block are represented with the accuracy $\varphi$. Bits($\varphi$) denotes the number of bits used to code the translational motion vectors of the current block with the accuracy $\varphi$. Thus, the optimum accuracy means accuracy $\varphi$, which produces the smallest value in Equation (13) among the set $\Pi$ of accuracies. The translational motion vectors of the current block are represented with the optimum accuracy.

Next, the converted translational motion vectors of the current block are predicted using translational motion vectors of neighbouring blocks, by the following Equations (step 110):

$$\hat{v}_{X,Ca} = median\{v_{X,Cb}, v_{X,Uc}, v_{X,Ud}\} \qquad (14a)$$

$$\hat{v}_{Y,Ca} = median\{v_{Y,Cb}, v_{Y,Uc}, v_{Y,Ud}\} \qquad (14b)$$

$$\hat{v}_{X,Cb} = median\{v_{X,Ca}, v_{X,Ud}, v_{X,Dc}\} \qquad (15a)$$

$$\hat{v}_{Y,Cb} = median\{v_{Y,Ca}, v_{Y,Us}, v_{Y,Dc}\} \qquad (15b)$$

$$\hat{v}_{X,Cc} = median\{v_{X,Ld}, v_{X,Ca}, v_{X,Cb}\} \qquad (16a)$$

$$\hat{v}_{Y,Cc} = median\{v_{Y,Ld}, v_{Y,Ca}, v_{Y,Cb}\} \qquad (16b)$$

In association therewith, Figure 3 shows the codes of the blocks. In Equations (16a) and (16b), the hats denote an operation for obtaining a predicted value, and median {} denotes the operation of obtaining the translational motion vector having a median magnitude among three translational motion vectors. Since the affine motion parameters are represented using the three translational motion vectors as expressed in Equations (11a) and (11b), the translational motion vector of a subblock at the lower right of the current block, for example subblock "d", may not be predicted nor encoded. Thus, subblocks of all blocks at the lower right may not be encoded. However, as expressed in Equations (14a) through (16b), the translational motion vectors of subblocks Ud and Ld are used in predicting the converted translational motion vectors of the current block. The translational motion vector of subblock "d" is calculated using the following Equations (17a) and (17b):

$$v_{X,Ud} = v_{X,Ub} + v_{X,Uc} - v_{X,Ua} \qquad (17a)$$

$$v_{Y,Ud} = v_{Y,Ub} + v_{Y,Uc} - v_{Y,Ua} \qquad (17b)$$

Furthermore, if an accuracy for the translational motion vectors of the neighbouring blocks in the Equations (14a) through (16b) is different from the accuracy for the translational motion vectors of the current block, the former is preferably revised to be the same as the latter.

Next, the difference between translational motion vectors is calculated using the converted translational motion vectors of the current block and the translational motion vectors of the neighboring blocks (step 112), and variable length coding is performed on the calculated translational motion vector difference (step 114).

Table 1

| Test image sequence | Format | Translational motion vector | Affine motion vector |
|---|---|---|---|
| Foreman | QCIF, 10Hz | 7.35 | 9.03 |
| Container | QCIF, 10Hz | 2.79 | 4.72 |
| News | QCIF, 10Hz | 4.14 | 6.30 |
| Silent | QCIF, 15Hz | 4.43 | 7.16 |
| Paris | CIF, 15Hz | 4.58 | 5.42 |
| Mobile | CIF, 30Hz | 4.08 | 6.22 |
| Tempete | CIF, 10Hz | 5.25 | 9.62 |

Table 1 contains the results of evaluating an average motion vector entropy using test images in a motion vector coding method of an embodiment of the present invention. As is evident from Table 1, the average motion vector entropy for test image sequences when the motion vector coding method according to the present invention based on an affine motion estimation is applied is greater than that for test image sequences when a conventional motion vector coding method based on a translational motion vector estimation is applied.

Table 2

| Test image sequence | Format | 16x16 block matching | 8x8 block matching | present invention |
|---|---|---|---|---|
| Foreman | QCIF, 10Hz | 29.34 | 31.58 | 32.37 |
| Container | QCIF, 10Hz | 38.31 | 39.01 | 39.93 |
| News | QCIF, 10Hz | 31.52 | 33.38 | 33.93 |
| Silent | QCIF, 15Hz | 33.53 | 35.45 | 35.98 |
| Paris | CIF, 15Hz | 31.04 | 32.49 | 32.52 |
| Mobile | CIF, 30Hz | 26.85 | 28.14 | 28.62 |
| Tempete | CIF, 10Hz | 28.48 | 29.59 | 29.69 |

Furthermore, Table 2 shows the result of measuring a peak-signal-to-noise ratio (PSNR) indicating an average prediction gain, which is expressed in decibels (dB). As is evident from Table 2, the PSNR measured for test image sequences when the motion vector coding method based on the affine motion estimation is applied is greater than that measured for test image sequences when the conventional motion vector coding method based on the translational motion vector estimation is applied.

That is, if a method including the steps 102 and 104 is applied as a motion estimation method for calculating a translational motion vector, high performance motion estimation is performed on small blocks whose dimensions are less than 16 by 16 (16 × 16) pixel blocks while maintaining improved motion estimation performance available from an affine motion estimation.

Furthermore, the motion vector coding method according to the present invention allows for bit generation ranging from 9.62 × 3 or 28.86 bits at the high end to 4.72 × 3 or 14.16 bits at the low end, thus reducing the bit rate compared to a conventional method in which 6 × 6 or 36 bits are generated during fixed length coding (FLC) of each affine parameter using 8 bits.

In the above embodiment, described with reference to Figure 1, step 102 of an affine motion estimation method using pixel values of a current block to be coded in a current image frame and of a search region in a preceding image frame to obtain affine motion parameters of the current block, step 104 for converting the affine motion parameters to translational motion vectors, and the step 106 of quantizing the converted translational motion vectors to fixed-point numbers having a predetermined accuracy are performed in a separate manner.

However, the above two steps 102 and 104 can be integrated into one step by performing an affine parameter estimation based on Equations (11a) and (11b), which reduces the complexity of the overall process.

Alternatively, the above three .steps 102, 104 and 106 may be integrated into one step by determining a predetermined pixel range for each translational motion vector of the current block and then determining the translational motion vector for each pixel value in the predetermined range, the pixel motion vector being represented with an accuracy that produces the smallest value in Equation (13). For example, it is possible to determine a predetermined subpixel range and then to determine a subpixel motion vector of the translational motion vector for each subpixel value in the predetermined range, the subpixel motion vector being obtained with an accuracy that produces the smallest value in Equation (13). In this case, the complexity of the process is further reduced.

Furthermore, in the step 102 in the embodiment described with reference to Figure 1, each translational motion vector component is obtained considering all variable factors that the component may have. However, it is possible to determine a predetermined range of pixels for each of six translational motion vector components {$v_{X,A}$, $v_{Y,A}$, $v_{X,B}$, $v_{Y,B}$, $v_{X,C}$, $v_{Y,C}$} and to determine a pixel motion vector of the translational motion vector for each pixel value in the predetermined range, the translational motion vector being obtained with an accuracy that gives the smallest value in Equation (13).

Furthermore, in the step 102, an initial value is set "0" as expressed by Equation (5). However, it is preferable to perform the step 102 by using one translational motion vector, which is obtained by means of a block matching algorithm for the current block, as the initial value. Furthermore, it is possible to use a motion parameter which minimizes the mean square sum of the difference signal between the current block and the preceding motion-compensated block among the estimated affine motion parameters of blocks located above the current block and located on the left thereof.

Furthermore, it is possible to reduce the complexity by obtaining one translational motion vector for the current block by a block matching algorithm and then using the obtained translational motion vector as the initial value to obtain the affine motion parameters for a predetermined pixel range in the step 102.

Furthermore, it is possible to further reduce the complexity by obtaining a motion parameter that minimizes the mean square sum of a difference signal between the current block and the preceding motion-compensated block among the estimated affine motion parameters of blocks located above the current block and located on the left thereof, and then using the obtained motion parameter as an initial value to obtain affine motion parameters for a predetermined pixel range in the step 102.

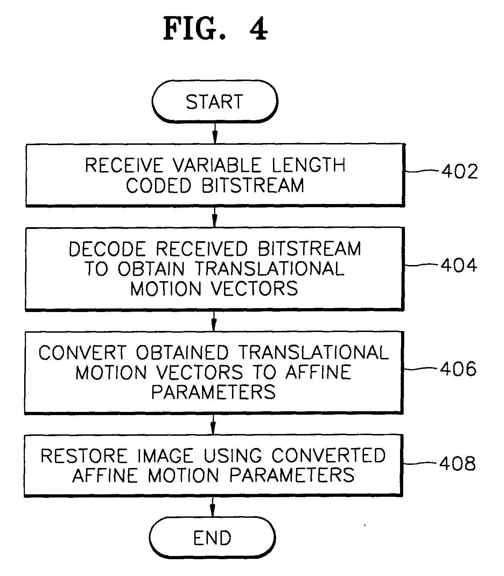

It is possible to decode a bitstream encoded using the motion vector coding method according to the present invention by a motion vector decoding according to the present invention. Figure 4 is a flowchart showing the main steps of a motion vector decoding according to the present invention. Referring to Figure 4, during the motion vector decoding, variable length coded data is received (step 402), and then the received data is variable length decoded to obtain translational motion vectors (step 404).

The bit stream encoded by the motion vector coding method contains the difference between median values of translational motion vectors of a corresponding block and its neighbouring blocks. Thus, after performing variable length decoding on the received data to obtain the difference between the median values of the corresponding block and the neighbouring blocks, the translational motion vectors are obtained using the difference.

Next, the obtained translational motion vectors are converted to affine motion parameters (step 406). The step 406 is a reverse process of the step of converting the motion parameters to the motion vectors described with reference to Figures 1 and 2, and therefore a detailed explanation is omitted. Then, motion compensation is performed using the affine motion parameters obtained in the step 406 to restore an image (step 408).

Furthermore, the motion vector coding method, the motion estimation method, and motion vector decoding according to the present invention can be in the form of a program executable on a personal or server computer. The program codes and code segments making up the program can be easily inferred by computer programmers in the industry from the foregoing description. Furthermore, the program can be stored in a computer-readable recording medium, e.g. optical or magnetic disks. The codes may also be transmitted by means of electric and electromagnetic signals.

As described above, the motion vector coding method according to the present invention allows for a low bit generation while maintaining improved motion estimation performance that can be obtained by using an affine motion estimation.

Furthermore, the motion vector coding method according to the present invention is capable of performing high performance motion estimation on small blocks whose dimensions are less than a $16 \times 16$ pixel block.

A video coding apparatus according to the present invention includes an input for receiving a video signal, an output for outputting a compressed video signal and processing means, programmed to perform a method as described above, for compressing a video signal received at the input.

**Claims**

1. A method for compressing a video signal, the method including a motion vector coding step comprising performing affine motion estimation to obtain affine motion parameters, **characterised by** converting the affine motion parameters into a plurality of translational motion vectors and coding the difference between the translational motion vectors for the current block and those for a previous block.

2. An apparatus for compressing a video signal, the apparatus including processing means configured to perform a method according to claim 1.

3. A method of coding a motion vector comprising the steps of:

   (a) performing an affine motion estimation to obtain affine motion parameters;
   (b) converting the affine motion parameters to a predetermined number of translational motion vectors; and
   (c) coding the difference between the converted translational motion vectors of a current block and the converted translational motion vectors of a previous block.

4. The method of claim 3, prior to the step (c), further comprising the step of quantizing the translational motion vectors in the step (b) to fixed-point numbers having a predetermined accuracy.

5. The method of claim 4, prior to the step (c), further comprising the step of determining a predetermined pixel range for each translational motion vector of the current block and obtaining an accuracy lp for each pixel value in the predetermined range, the accuracy lp producing the smallest value

$$\min_{\varphi \in \Pi}\{MSE(\varphi) + \lambda Bits(\varphi)\}$$

among a set $\Pi$ of accuracies, where QP is a quantization interval used in coding an image, A is a constant determined based on the quantization interval QP, MSE($\varphi$) denotes the mean square sum of a differential signal between the current block and the preceding motion-compensated block when translational motion vectors of the current block are represented with an accuracy $\varphi$, and Bits ($\varphi$) denotes the number of bits used to code the translational motion vector of the current block with an accuracy $\varphi$.

6. The method of claim 5, further comprising the step of predicting the converted translational motion vectors of the current block by translational motion vectors of neighboring blocks using

$$\hat{v}_{X,Ca} = median\{v_{X,Cb}, v_{X,Uc}, v_{X,Ud}\},$$

$$\hat{v}_{Y,Ca} = median\{v_{Y,Cb}, v_{Y,Uc}, v_{Y,Ud}\}, \quad \hat{v}_{X,Cb} = median\{v_{X,Ca}, v_{X,Ud}, v_{X,Dc}\},$$

$$\hat{v}_{Y,Cb} = median\{v_{Y,Ca}, v_{Y,Us}, v_{Y,Dc}\}, \quad \hat{v}_{X,Cc} = median\{v_{X,Ld}, v_{X,Ca}, v_{X,Cb}\}$$

and

$$\hat{v}_{Y,Cc} = median\{v_{Y,Ld}, v_{Y,Ca}, v_{Y,Cb}\},$$

where a hat denotes an operation for obtaining a predicted value and median { } denotes an operation of obtaining the translational motion vector having the median magnitude among the translational motion vectors.

7. The method of claim 3, wherein the step (c) comprises the steps of:

   (c-1) calculating the differences between the translational motion vectors of the current block and the blocks neighboring the current block by using the converted translational motion vectors of the current block and the translational motion vectors of the neighboring blocks; and
   (c-2) performing variable length coding on the obtained differences between the translational motion vectors.

8. The method of claim 3, wherein the step (a) comprises the step of obtaining six affine motion estimation parameters $[a_0, a_1, a_2, ..., a_5]^T$ by estimating the motion of a pixel in an image using pixel values of a block to be encoded in a current frame and pixel values in a preceding frame and using $v_X(i,j)=a_0+a_1 i+a_2 j$ and and $v_Y(i, j) = a_3 + a_4 i + a_5 j$, where the pair (i,j) are the coordinates of a macroblock or the subblock thereof.

9. The method of claim 3, wherein the step (b) comprises the step of obtaining motion vectors of the center points of the subblocks A, B, C, and D by using

$$[v_{X,A}, v_{Y,A}] = [a_0 + a_1\alpha + a_2\alpha, a_3 + a_4\alpha + a_5\alpha],$$

$$[v_{X,B}, v_{Y,B}] = [a_0 + 3a_1\alpha + a_2\alpha, a_3 + 3a_4\alpha + a_5\alpha],$$

and

$$[v_{X,C}, v_{Y,C}] = [a_0 + a_1\alpha + 3a_2\alpha, a_3 + a_4\alpha + 3a_5\alpha] \text{ based on}$$

$$v_X(i, j) = \frac{1}{2\alpha}(4\alpha\text{-}i\text{-}j)v_{X,A} + \frac{1}{2\alpha}(\text{-}2\alpha\text{-}i)v_{X,B} + \frac{1}{2\alpha}(\text{-}2\alpha\text{-}j)v_{X,C},$$

$$v_Y(i, j) = \frac{1}{2\alpha}(4\alpha\text{-}i\text{-}j)v_{Y,A} + \frac{1}{2\alpha}(\text{-}2\alpha\text{-}i)v_{Y,B} + \frac{1}{2\alpha}(\text{-}2\alpha\text{-}j)v_{Y,C},$$

where one macroblock consists of subblocks A, B, C, and D, the size of the macroblock is $8 \times 8$, and the constant a is S/4 + 1/2.

10. The method of claim 3, after the step (b ), further comprising the steps of:

(b'-1) quantizing the converted translational motion vectors to fixed-point numbers having a predetermined accuracy;
(b'-2) selecting an optimum accuracy considering a bit rate and distortion among accuracies, with which the translational motion vectors are represented; and
(b'-3) predicting translatonal motion vectors having the selected accuracy using converted translational motion vectors of neighboring blocks

11. The method of claim 13 prior to the step (a), further comprising the step of obtaining one translational motion vector for the current block by a block matching technique,
wherein the step (a) further comprises the step (a') performing an affine motion estimation using the obtained translational motion vector as an initial value.

12. The method of claim 3, prior to the step (a), further comprising the step of obtaining a motion parameter that minimizes the mean square sum of a difference signal between the current block and the motion-compensated previous block am'ong estimated affine motion parameters of blocks located above the current block and located on the left thereof,
wherein the step (a) comprises the step of (a') performing an affine motion estimation using the obtained motion parameter as an initial value to obtain affine motion parameters for a predetermined pixel range.

13. A method of coding a motion vector comprising the steps of:

(a) performing an affine motion estimation to obtain affine motion parameters;
(b) obtaining translational motion vectors based

$$v_X(i, j) = \frac{1}{2\alpha}(4\alpha\text{-}i\text{-}j)v_{X,A} + \frac{1}{2\alpha}(\text{-}2\alpha\text{-}i)v_{X,B} + \frac{1}{2\alpha}(\text{-}2\alpha\text{-}j)v_{X,C},$$

and

$$v_Y(i,j) = \frac{1}{2\alpha}(4\alpha\text{-}i\text{-}j)v_{Y,A} + \frac{1}{2\alpha}(\text{-}2\alpha\text{-}i)v_{Y,B} + \frac{1}{2\alpha}(\text{-}2\alpha\text{-}j)v_{Y,C},$$

where the size of a block is S S, and the constant a is S/4 + 1/2; and
(c) coding the difference between the translational motion vectors obtained in the step (b).

**14.** The method of claim 13, prior to the step (c), further comprising the step of quantizing the translational motion vectors converted in the step (b) to fixed-point numbers having a predetermined accuracy.

**15.** The method of claim 13, prior to the step (c), further comprising the step of determining a predetermined pixel range for each translational motion vector of a current block and obtaining an accuracy φ for each pixel value in the predetermined range, the accuracy φ producing the smallest value in

$$\min_{\varphi\in\Pi}\{MSE(\varphi) + \lambda Bits(\varphi)\}$$

among a set Π of accuracies, where QP is a quantization interval used in coding an image, A is a constant determined based on the quantization interval QP, MSE(φ) denotes the mean square sum of a differential signal between the current block and the preceding motion-compensated block when translational motion vectors of the current block are represented with an accuracy φ, and Bits(φ) denotes the number of bits used to code the translational motion vector of the current block with an accuracy φ.

**16.** The method of claim 15, further comprising the step of predicting the converted translational motion vectors of the current block by translational motion vectors of neighboring blocks using

$$\hat{v}_{X,Ca} = median\{v_{X,Cb}, v_{X,Uc}, v_{X,Ud}\},$$

$$\hat{v}_{Y,Ca} = median\{v_{Y,Cb}, v_{Y,Uc}, v_{Y,Ud}\}, \quad \hat{v}_{X,Cb} = median\{v_{X,Ca}, v_{X,Ud}, v_{X,Dc}\},$$

$$\hat{v}_{Y,Cb} = median\{v_{Y,Ca}, v_{Y,Us}, v_{Y,Dc}\}, \quad \hat{v}_{X,Cc} = median\{v_{X,Ld}, v_{X,Ca}, v_{X,Cb}\}$$

and

$$\hat{v}_{Y,Cc} = median\{v_{Y,Ld}, v_{Y,Ca}, v_{Y,Cb}\},$$

where a hat denotes an operation for obtaining a predicted value and median {} denotes an operation of obtaining the translational motion vector having the median magnitude among the translational motion vectors.

**17.** The method of claim 15, wherein the step (c) comprises the steps of:

(c-1) calculating the differences between the translational motion vectors of the current block and the blocks neighboring the current block by using the converted translational motion vectors of the current block and translational motion vectors of the neighboring blocks; and
(c-2) performing variable length coding on the obtained differences between the translational motion vectors.

**18.** A method of coding a motion vector comprising the steps of:

(a) determining a predetermined pixel range for each translational motion vector of a current block;
(b) determining the translational motion vector of a current block for each pixel value in the predetermined range, wherein the pixel motion vector is represented with an accuracy φ that produces the smallest value in

$$\min_{\varphi \in \Pi}\{MSE(\varphi) + \lambda Bits(\varphi)\}$$

among a set Π of accuracies, where QP is a quantization interval used in coding an image, A is a constant determined based on the quantization interval QP, MSE(φ) denotes the mean square sum of a differential signal between the current block and the preceding motion-compensated block when translational motion vectors of the current block are represented with an accuracy φ, and Bits(φ) denotes the number of bits used to code the translational motion vector of the current block with an accuracy φ; and
(c) coding the difference between the translational motion vectors of the current block and the translational motion vectors of the previous block.

**19.** The method of claim 18, prior to the step (c), further comprising the step of predicting the converted translational motion vectors of the current block by translational motion vectors of neighboring blocks using

$$\hat{v}_{X,Ca} = median\{v_{X,Cb}, v_{X,Uc}, v_{X,Ud}\}, \quad \hat{v}_{Y,Ca} = median\{v_{Y,Cb}, v_{Y,Uc}, v_{Y,Ud}\},$$

$$\hat{v}_{X,Cb} = median\{v_{X,Ca}, v_{X,Ud}, v_{X,Dc}\}, \quad \hat{v}_{Y,Cb} = median\{v_{Y,Ca}, v_{Y,Us}, v_{Y,Dc}\},$$

$$\hat{v}_{X,Cc} = median\{v_{X,Ld}, v_{X,Ca}, v_{X,Cb}\} \text{ and } \hat{v}_{Y,Cc} = median\{v_{Y,Ld}, v_{Y,Ca}, v_{Y,Cb}\},$$

where a hat denotes an operation for obtaining a predicted value and median {} denotes an operation of obtaining the translational motion vector having the median magnitude among the translational motion vectors.

**20.** The method of claim 18, wherein the step (c) comprises the steps of:

(c-1) calculating the differences between the translational motion vectors of the current block and the blocks neighboring the current block by using the converted translational motion vectors of the current block and translational motion vectors of the neighboring blocks; and
(c-2) performing variable length coding on the obtained differences between the translational motion vectors.

**21.** A method of coding a motion vector comprising the steps of:

(a) determining a predetermined pixel range for each of six translational motion vector components {$v_{X,A}$, $v_{Y,A}$, $v_{X,B}$, $v_{Y,B}$, $v_{X,C}$, $v_{Y,C}$,};
(b) obtaining the translational motion vector of a current block for each pixel values in the predetermined range determined for each of the six translational motion vector components {$v_{X,A}$, $v_{Y,A}$, $v_{X,B}$, $v_{Y,B}$, $v_{X,C}$, $v_{Y,C}$,} in the step (a), wherein the pixel motion vector is represented with an accuracy accuracy φ that produces the smallest value in

$$\min_{\varphi \in \Pi}\{MSE(\varphi) + \lambda Bits(\varphi)\}$$

among a set Π of accuracies, where QP is a quantization interval used in coding an image, A is a constant determined based on the quantization interval QP, MSE(φ) denotes the mean square sum of a differential signal between the current block and the preceding motion-compensated block when translational motion vectors of the current block are represented with an accuracy φ, and Bits(φ) denotes the number of bits used to code the translational motion vector of the current block with an accuracy φ; and
(c} coding the difference between the translational motion vectors obtained in the step (b).

**22.** The method of claim 21, prior to the step (c}, further comprising the step of predicting the converted translational motion vectors of the current block by translational motion vectors of neighboring blocks using

$$\hat{v}_{X,Ca} = median\{v_{X,Cb}, v_{X,Uc}, v_{X,Ud}\}, \quad \hat{v}_{Y,Ca} = median\{v_{Y,Cb}, v_{Y,Uc}, v_{Y,Ud}\},$$

$$\hat{v}_{X,Cb} = median\{v_{X,Ca}, v_{X,Ud}, v_{X,Dc}\}, \quad \hat{v}_{Y,Cb} = median\{v_{Y,Ca}, v_{Y,Us}, v_{Y,Dc}\},$$

$$\hat{v}_{X,Cc} = median\{v_{X,Ld}, v_{X,Ca}, v_{X,Cb}\} \text{ and } \hat{v}_{Y,Cc} = median\{v_{Y,Ld}, v_{Y,Ca}, v_{Y,Cb}\},$$

where a hat denotes an operation for obtaining a predicted value and median {} denotes an operation of obtaining the translational motion vector having the median magnitude among the translational motion vectors.

**23.** The method of claim 21, wherein the step (c} comprises the steps of:

(c-1) calculating the differences between the translational motion vectors of the current block and the blocks neighboring the current block by using the converted translational motion vectors of the current block and translational motion vectors of the neighboring blocks; and

(c-2} performing variable length coding on the obtained differences between the translational motion vectors.

**24.** A motion estimation method comprising the steps of:

(a) performing an affine motion estimation to obtain affine motion parameters; and

(b) converting the affine motion parameters to a predetermined number of translational motion vectors.

**25.** The method of claim 24, after the step (b), further comprising the step of quantizing the translational motion vector converted in the step (b) to fixed-point numbers having a predetermined accuracy.

**26.** The method of claim 25, after the step (b), further comprising the step of determining a predetermined pixel range for each translational motion vector of the current block and obtaining an accuracy rp for each pixel value in the predetermined range, the the accuracy φ producing the smallest value in

$$\min_{\varphi \in \Pi}\{MSE(\varphi) + \lambda Bits(\varphi)\}$$

among a set Π of accuracies, where QP is a quantization interval used in coding an image, A is a constant determined based on the quantization interval QP, MSE(φ) denotes the mean square sum of a differential signal between the current block and the preceding motion-compensated block when translational motion vectors of the current block are represented with an accuracy φ, and Bits(φ) denotes the number of bits used to code the translational motion vector of the current block with an accuracy φ.

**27.** The method of claim 26, further comprising the step of predicting the converted translational motion vectors of the current block by translational motion vectors of neighboring blocks using

$$\hat{v}_{X,Ca} = median\{v_{X,Cb}, v_{X,Uc}, v_{X,Ud}\},$$

$$\hat{v}_{Y,Ca} = median\{v_{Y,Cb}, v_{Y,Uc}, v_{Y,Ud}\}, \quad \hat{v}_{X,Cb} = median\{v_{X,Ca}, v_{X,Ud}, v_{X,Dc}\},$$

$$\hat{v}_{Y,Cb} = median\{v_{Y,Ca}, v_{Y,Us}, v_{Y,Dc}\}, \quad \hat{v}_{X,Cc} = median\{v_{X,Ld}, v_{X,Ca}, v_{X,Cb}\}$$

and

$$\hat{v}_{Y,Cc} = median\{v_{Y,Ld}, v_{Y,Ca}, v_{Y,Cb}\},$$

where a hat denotes an operation for obtaining a predicted value and median { } denotes an operation of obtaining the translational motion vector having the median magnitude among the translational motion vectors.

**28.** A method of decoding a motion vector comprising the steps of:

(a) receiving encoded data;
(b) decoding the received data to obtain translational motion vectors; (c) converting the obtained translational motion vectors to affine motion parameters; and
(d) performing motion compensation using the obtained affine motion parameters.

# FIG. 1

START

ESTIMATE AFFINE MOTION PARAMETERS USING PIXEL VALUES OF BLOCK TO BE CODED IN CURRENT FRAME AND PIXEL VALUES OF SEARCH AREA IN PREVIOUS FRAME — 102

CONVERT ESTIMATED AFFINE MOTION PARAMETERS TO TRANSLATIONAL MOTION VECTORS — 104

QUANTIZE CONVERTED TRANSLATIONAL MOTION VECTORS TO FIXED—POINT NUMBER HAVING PREDETERMINED ACCURACY — 106

SELECT OPTIMUM ACCURACY — 108

PREDICT TRANSLATIONAL MOTION VECTORS OF SELECTED ACCURACY USING TRANSLATIONAL MOTION VECTORS OF NEIGHBORING BLOCKS — 110

CALCULATE DIFFERENCES BETWEEN TRANSLATIONAL MOTION VECOTRS USING CONVERTED TRANSLATIONAL MOTION VECTORS OF CURRENT BLOCK AND NEIGHBORING BLOCKS — 112

PERFORM VARIABLE LENGTH CODING ON DIFFERENCE BETWEEN TRANSLATIONAL MOTION VECTORS — 114

END

# FIG. 2

# FIG. 3

# FIG. 4

START

RECEIVE VARIABLE LENGTH
CODED BITSTREAM — 402

DECODE RECEIVED BITSTREAM
TO OBTAIN TRANSLATIONAL
MOTION VECTORS — 404

CONVERT OBTAINED TRANSLATIONAL
MOTION VECTORS TO AFFINE
PARAMETERS — 406

RESTORE IMAGE USING CONVERTED
AFFINE MOTION PARAMETERS — 408

END

**European Patent Office**

**EUROPEAN SEARCH REPORT**

Application Number

EP 01 30 4607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 921 688 A (NIPPON TELEGRAPH & TELEPHONE) 9 June 1999 (1999-06-09) | 1-3,13, 24,28 | H04N7/26 |
| A | * column 2, paragraph 6 - column 5, line 2; claims 21,26,31,36,51 * | 4-12, 14-23, 25-27 | |
| | * column 6, paragraph 35 - column 9, paragraph 46 * | | |
| | * column 10, paragraph 52 - column 11, paragraph 55 * | | |
| | --- | | |
| A | US 5 692 063 A (CHEN WEI-GE ET AL) 25 November 1997 (1997-11-25) | 1-28 | |
| | * column 4, paragraph 4 * | | |
| | * column 6, paragraph 1; figure 12 * | | |
| | * column 19, paragraph 4 - column 23, paragraph 4 * | | |
| | --- | | |
| A | US 5 978 030 A (JUNG HAE-MOOK ET AL) 2 November 1999 (1999-11-02) | 1-28 | |
| | * abstract * | | |
| | * column 1, last paragraph - column 3, paragraph 1; figure 3 * | | TECHNICAL FIELDS SEARCHED (Int.Cl.7) |
| | * column 9, line 45 - column 10, line 49 * | | H04N |
| | --- | | |
| A | EP 0 797 357 A (HITACHI LTD) 24 September 1997 (1997-09-24) | 1-28 | |
| | * abstract * | | |
| | * the whole document * | | |
| | --- | | |
| A | EP 0 765 087 A (SHARP KK) 26 March 1997 (1997-03-26) | 1-28 | |
| | * abstract * | | |
| | --- | | |
| | -/-- | | |

The present search report has been drawn up for all claims

| Place of search | Date of completion of the search | Examiner |
|---|---|---|
| BERLIN | 26 September 2001 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**European Patent Office**

**EUROPEAN SEARCH REPORT**

Application Number

EP 01 30 4607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SHARAF A ET AL: "Motion compensation using spatial transformations with forward mapping" SIGNAL PROCESSING. IMAGE COMMUNICATION, ELSEVIER SCIENCE PUBLISHERS, AMSTERDAM, NL, vol. 14, no. 3, 4 January 1999 (1999-01-04), pages 209-227, XP004144075 ISSN: 0923-5965 * page 219, left-hand column, paragraph 4 - page 220, right-hand column, line 3; figure 5 * | 1-28 | |
| A | PATENT ABSTRACTS OF JAPAN vol. 1997, no. 11, 28 November 1997 (1997-11-28) & JP 09 182082 A (NIPPON TELEGR &AMP;TELEPH CORP &LT;NTT&GT;), 11 July 1997 (1997-07-11) * abstract * | 1-28 | |
| A | US 5 905 535 A (KERDRANVAT MICHEL) 18 May 1999 (1999-05-18) * column 1, line 59 - column 2, line 2 * * column 5, line 41 - line 49; claims 1,7,9,12 * | 6,16,19, 22,27 | |

-/--

TECHNICAL FIELDS SEARCHED (Int.Cl.7)

The present search report has been drawn up for all claims

| Place of search | Date of completion of the search | Examiner |
|---|---|---|
| BERLIN | 26 September 2001 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 30 4607

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| L | GHANBARI M ET AL: "Motion compensation for very low bit-rate video" SIGNAL PROCESSING. IMAGE COMMUNICATION, ELSEVIER SCIENCE PUBLISHERS, AMSTERDAM, NL, vol. 7, no. 4, 1 November 1995 (1995-11-01), pages 567-580, XP004047100 ISSN: 0923-5965 * page 1467, left-hand column, paragraph 3.2 - page 1468, right-hand column, paragraph 3.5 * ----- | 1-281 | |
| | | | **TECHNICAL FIELDS SEARCHED** (Int.Cl.7) |

The present search report has been drawn up for all claims

| Place of search | Date of completion of the search | Examiner |
|---|---|---|
| BERLIN | 26 September 2001 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 30 4607

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2001

| Patent document cited in search report | | Publication date | Patent family member(s) | | Publication date |
|---|---|---|---|---|---|
| EP 0921688 | A | 09-06-1999 | EP | 0921688 A1 | 09-06-1999 |
| | | | WO | 9859496 A1 | 30-12-1998 |
| | | | JP | 2914448 B2 | 28-06-1999 |
| | | | JP | 11088888 A | 30-03-1999 |
| US 5692063 | A | 25-11-1997 | NONE | | |
| US 5978030 | A | 02-11-1999 | KR | 181034 B1 | 01-05-1999 |
| | | | AU | 711311 B2 | 07-10-1999 |
| | | | AU | 2420695 A | 08-10-1996 |
| | | | BR | 9510541 A | 09-06-1998 |
| | | | CA | 2215386 A1 | 26-09-1996 |
| | | | CZ | 9702902 A3 | 18-02-1998 |
| | | | EP | 0815690 A1 | 07-01-1998 |
| | | | FI | 973715 A | 17-11-1997 |
| | | | JP | 11506576 T | 08-06-1999 |
| | | | WO | 9629828 A1 | 26-09-1996 |
| | | | NO | 974209 A | 31-10-1997 |
| | | | PL | 322302 A1 | 19-01-1998 |
| EP 0797357 | A | 24-09-1997 | JP | 3183155 B2 | 03-07-2001 |
| | | | JP | 9252470 A | 22-09-1997 |
| | | | EP | 0797357 A2 | 24-09-1997 |
| | | | TW | 421972 B | 11-02-2001 |
| | | | US | 6178202 B1 | 23-01-2001 |
| | | | US | 6008852 A | 28-12-1999 |
| EP 0765087 | A | 26-03-1997 | JP | 9065342 A | 07-03-1997 |
| | | | JP | 9172644 A | 30-06-1997 |
| | | | JP | 9261654 A | 03-10-1997 |
| | | | EP | 0765087 A2 | 26-03-1997 |
| | | | US | 5886742 A | 23-03-1999 |
| | | | US | 6275532 B1 | 14-08-2001 |
| JP 09182082 | A | 11-07-1997 | NONE | | |
| US 5905535 | A | 18-05-1999 | FR | 2725577 A1 | 12-04-1996 |
| | | | CA | 2160087 A1 | 11-04-1996 |
| | | | CN | 1132983 A | 09-10-1996 |
| | | | EP | 0707428 A1 | 17-04-1996 |
| | | | JP | 8251601 A | 27-09-1996 |

EPO FORM P0459

For more details about this annex : see Official Journal of the European Patent Office, No. 12/82